# EUROPÄISCHE PATENTSCHRIFT

(11) **EP 0 676 227 B1**
(45) Veröffentlichungstag und Bekanntmachung des Hinweises auf die Patenterteilung: **17.12.1997**
(21) Anmeldenummer: 95103824.9
(22) Anmeldetag: 16.03.1995
(51) Int. Cl.: B01D 33/333, E03F 5/14

(54) **Förderband-Filtereinrichtung**
Conveyor belt filter device
Dispositif de filtration en forme d'une bande transporteuse

(30) Priorität: 08.04.1994 EP 94105447
(43) Veröffentlichungstag der Anmeldung: 11.10.1995
(73) Patentinhaber: Frankenberger, Dieter, D-35415 Pohlheim (DE)
(72) Erfinder: Frankenberger, Dieter, D-35415 Pohlheim (DE)
(74) Vertreter: Missling, Arne, Dipl.-Ing.

(56) Entgegenhaltungen:
- EP-A- 0 291 574
- CH-A- 101 821
- DE-A- 3 004 961
- DE-A- 4 200 366
- DE-C- 163 182
- US-A- 2 307 601
- US-A- 2 671 563
- US-A- 3 802 565

## Beschreibung

Die Erfindung betrifft eine Förderband-Filtereinrichtung zur mechanischen Reinigung einer in einem Kanal oder dergleichen strömenden, mit Feststoffen verunreinigten Flüssigkeit mit einem endlosen Filterband aus miteinander verbundenen, jeweils um eine waagerecht liegende Gelenkachse gegeneinander verschiebbaren, flächigen Filterelementen, wobei jedes Filterelement zwei einander gegenüberliegende Stirnflächen aufweist, einem beiderseits des Filterbandes vorgesehenen flexiblen Antriebsmittel aus einem Kettentrieb mit Umlenkelementen und zwei endlosen, Kettenglieder aufweisenden Antriebsketten, an denen seitlich die Filterelemente befestigt sind, einem Rahmengestell, das die Umlenkelemente und das Filterband trägt, wobei das Rahmengestell ein außerhalb des Kanals verbleibendes oberes Gestellteil aufweist, an dem mindestens ein Antriebsmotor für das Antriebsmittel befestigt ist und in dessen Bereich das Filtergut ausgeworfen werden kann.

Eine Förderband-Filtereinrichtung dieser Art ist aus der Patentschrift EP-B-0 291 574 bereits bekannt. Derartige Förderband-Filtereinrichtungen, sogenannte Paternoster-Filterrechen, dienen vor allem zur mechanischen Reinigung strömender Abwässer in entsprechenden Kanälen, wobei das Gestellunterteil des im Betrieb zumeist geneigt angeordneten Rahmengestells in einen derartigen Kanal eingeführt wird. Die Filterelemente werden von dem Abwasser durchströmt und tragen das Filtergut, welches die Filtersiebe nicht passieren kann, über das Gestelloberteil aus dem Kanal aus. Die Filterelemente sind in bezug auf Art, Umfang und Verteilung der Durchströmungsöffnungen je nach Anwendungszweck verschieden gestaltet; als besonders zweckmäßig haben sich alternierende Anordnungen herausgestellt.

Erhebliche Schwierigkeiten bei der Ausfilterung von Abwässern mittels einer solchen bekannten Förderband-Filtereinrichtung ergeben sich allerdings dann, wenn dem auszufilternden Filtergut gröbere Feststücke wie Steine, Hölzer oder dergleichen beigemengt sind, die von den das Filtergut fördernden Filterelementen abgleiten und in den Kanal zurückfallen oder die erst überhaupt nicht aufgenommen werden können. Sie verbleiben in dem Kanal und behindern die mechanische Reinigung in zunehmenden Maße, so daß sie fortwährend mit entsprechenden Hilfsmitteln entfernt werden müssen. Eine kontinuierliche Arbeitsweise der Förderband-Filtereinrichtung ist bei derart belasteten Abwässern nicht mehr gewährleistet; Ausfallzeiten und hoher Personalaufwand sind die unausweichliche Folge.

Aus der DE-A-42 00 366 ist eine Filtereinrichtung bekannt, die an einem umlaufenden Kettentrieb befestigte Filterelemente aufweist. Diese Filterelemente sind mit ihrem einen Ende jeweils am Kettentrieb schwenkbar befestigt und liegen mit ihren jeweiligen anderen Enden gegeneinander, so daß im Umlenkbereich die Filterelemente gegeneinander und gegenüber dem Kettentrieb verschwenkbar sind. Die Enden dieser flächigen Filterelemente sind kammförmig ausgebildet und winklig abgebogen.

Die Erfindung hat sich deshalb die Aufgabe gestellt, eine Förderband-Filtereinrichtung der eingangs näher bezeichneten Art so einzurichten, daß die Filterung von strömenden, mit Feststoffen verunreinigten Flüssigkeiten durch mit den Flüssigkeiten mitgeführte oder in dem Kanal ruhend abgelagerte grobe Feststücke nicht behindert wird und diese Feststücke während des Betriebes der Förderband-Filtereinrichtung konstant mit dem übrigen, feinkörnigeren Filtergut ausgetragen werden.

Erfindungsgemäß wird die Aufgabe mit den Merkmalen des Anspruches 1 gelöst.

Während feinkörniges Filtergut von den Filterelementen selbst aus dem Kanal herausgefördert wird, können nunmehr Steine, Hölzer und dergleichen grobe Feststücke gleichzeitig und mechanisch abtransportiert werden, ohne daß die Arbeit der Förderband-Filtereinrichtung unterbrochen werden müßte. Auf diese Weise ist eine über lange Zeit ohne Eingriffe arbeitende Filterung sichergestellt, die keine besonderen Vorkehrungen oder eine zusätzliche Vorreinigung von groben Feststücken erfordert und deshalb universeller einsetzbar ist. Durch die spezielle Ausbildung der Filterelemente ist die Filterung zum einen sehr effektiv und zum anderen läßt sich das Filtergut z. B. durch Bürsten mit geringem Energieaufwand wieder entfernen. Besonders vorteilhaft ist es, wenn die aktive Oberfläche des Filterelementes konvex mit einem Krümmungsradius ausgebildet ist, der dem Abstand zur Achse des Kettenrades entspricht.

Die Längskanten der Filterelemente und die Filterrechen verlaufen zweckmäßig jeweils quer zu der Strömungsrichtung der zu filternden Flüssigkeit und etwa waagerecht, wobei die Förderband-Filtereinrichtung während des Betriebes so aufstellbar ist, daß eine die Achsen der Umlenkelemente verbindende Hauptachse um einen spitzen Förderwinkel zur Senkrechten geneigt ist, so daß das Rahmengestell tatsächlich während des Betriebes geneigt angeordnet ist und das Filtergut nicht während der Förderung von den Filterelementen abgleiten kann.

Unabhängig davon kann die Anordnung so getroffen sein, daß die Hebeflächen mit einer Normalen auf der Hauptachse einen Neigungswinkel zwischen 0° und 30° einschließen. Auf diese Weise kann man durch die Abstimmung des Neigungswinkels mit dem Förderwinkel dafür sorgen, daß die Hebeflächen stets so orientiert sind, daß aufliegendes Filtergut während der Förderung nicht abgespült werden oder herunterfallen kann.

Die Förderband-Filtereinrichtung ist einfach ausführbar, wenn die Rechenzinken während der Förderung der Strömungsrichtung der Flüssigkeit entgegengerichtet sind und sich so zwanglos dem restlichen Filterelement anpassen.

Als untere Umlenkelemente können glatte Umlenkrollen oder Kettenräder vorgesehen sein. In beiden Ausführungen ist es zweckmäßig, wenn die Umlenkelemente so ausgebildet sind, daß die geradlinigen Aufwärts- und Abwärtsbewegungen der Filterelemente parallel zueinander verlaufen.

Das Filterband aus den Filterelementen wird in einfacher Weise dadurch gebildet, daß an den Enden der Kettenglieder die Gelenklager für jeweils zwei parallele Gelenkachsen ausgebildet sind.

Die Filterelemente sind den hohen Belastungen durch auf den Hebeflächen aufliegende, gegebenenfalls sehr schwere Feststücke angepaßt, wenn an den Längskanten der Filterelemente Stirnflächen abgewinkelt sind, wenn darüberhinaus an den Filterelementen Seitenflächen abgewinkelt und die Stirnflächen mit den Seitenflächen fest verbunden sind, zweckmäßig so, daß die Stirnflächen und/oder Seitenflächen im Betrieb des Filterbandes in Richtung auf die Hauptachse weisen, so daß sie in Strömungsrichtung abgekantet verlaufen und das spätere Abfallen oder Abstreifen des Filtergutes von dem Filterband nicht behindern.

Eine stets geschlossene Fläche der Förderband-Filtereinrichtung läßt sich mit hoher Sicherheit dadurch realisieren, daß die Stirnflächen wenigsten in Teilen eben und an ihnen jeweils mit den Gelenkachsen fluchtende Stoßkanten ausgebildet sind in der Weise, daß zwei aneinanderstoßende Stirnflächen benachbarter Filterelemente an diesen Stoßkanten sowohl bei geradliniger Bewegung als auch bei der Umlenkung dieser Filterelemente beständig einen etwa konstant-geringen Abstand voneinander aufweisen, der das Filtergut in Strömungsrichtung nicht passieren läßt. Auf diese Weise erfolgt die Filterung nahezu vollständig, trotz der gelenkig verbundenen Filterelemente.

Im einzelnen ist es zu diesem Zweck noch günstig, wenn die Stoßkanten durch jeweils eine längskanten-parallele Abkantung der Stirnflächen gebildet werden, am besten, indem die durch die Abkantung einer Stirnfläche gebildeten Teilflächen einen stumpfen, vorzugsweise annähernd rechten Abkantwinkel einschließen, wobei die Stirnflächen und/oder die Seitenflächen vorteilhaft so ausgebildet sind, daß sie die flächigen Filterelemente zu räumlichen, zu der Hauptachse hin offenen Filterkörben ergänzen, die dabei einen dreieckigen, durch die Abkantungen gebrochenen Querschnitt aufweisen. Ein solcher Filterkorb ist außerordentlich formstabil und dabei trotzdem relativ leicht ausführbar. Um einen derartigen, etwa dreieckigen Querschnitt zu gewinnen, ist es zweckmäßig, wenn eine erste, gegenüber der anderen höhere Stirnfläche vorgesehen ist, an der oder in deren Nähe an dem Filterelement der Filterrechen vorgesehen ist. Die Krafteinleitung findet demgemäß im Bereich des größten Widerstandsmomentes statt.

Um eine Abdichtung der Filterrechen im Bereich der Sohle des Kanals zu gewährleisten, ist an dem Rahmengestell quer zu der Strömungsrichtung eine die Filterrechen abdichtende Abdichteinrichtung vorgesehen. Es können an ihr elastische Abstreifelemente vorgesehen sein, die in die Lücken zwischen den Rechenzinken des jeweiligen, durch die Abstreifeinrichtung bewegten Filterrechens eingreifen, beispielsweise in Form einer Bürste.

Wegen der oft enormen Breite der Förderband-Filtereinrichtung besteht die Gefahr, daß sich die breiten Filterelemente unter der Belastung aus den beladenen Filterrechen während der Förderung durchbiegen. Man kann dem Rechnung tragen, indem das gezogene Trumm des Filterbandes auf mindestens einer an dem Rahmengestell ortsfest gehalterten Unterlage gleitend aufliegend angeordnet ist, wobei die Unterlage vorteilhaft aus parallel zu der Förderrichtung der Filterelemente vorgesehenen Auflageschienen besteht. Die Anordnung wird insbesondere dadurch ermöglicht, daß sich an dem Rahmengestell beiderseits des Filterbandes Seitenwangen befinden. Die Unterlage kann auf waagerechten Quertraversen angebracht sein, die seitlich am Rahmengestell, insbesondere an dessen Seitenwangen, befestigt sind. Aber auch für die Filterelemente selbst sind gegebenenfalls Sicherungsvorkehrungen erforderlich, so daß sie auch hohe Lasten ohne Schaden auf die Unterlage übertragen können; deshalb kann es günstig sein, wenn an den Filterelementen diese versteifende Gleitstücke vorgesehen sind, die auf der Unterlage aufliegen.

Zur Reinigung des Filterbandes dient in erster Linie eine oberhalb desselben angeordnete rotierende Bürste. Die Reinigung des Filterbandes wird noch dadurch verbessert, wenn an dem oberen Gestellteil eine zweite Abstreifeinrichtung vorgesehen ist, die an den Filterelementen festhaftendes, nicht abgeworfenes Filtergut von dem Filterband entfernt, wobei als Abstreifelement wiederum eine Bürste vorgesehen sein kann.

Ein gleichförmiger Betrieb ist gewährleistet, wenn an jedem der Filterelemente je ein Filterrechen oder zumindest, wenn an einem Teil der Filterelemente, vorzugsweise in gleicher Teilung des Filterbandes, je ein Filterrechen vorgesehen ist. Die Anfertigung und der Zusammenbau werden erleichtert, wenn die Filterelemente nach Art, Umfang und Verteilung der Durchströmungsöffnungen an dem Filterband verschieden und alternierend vorgesehen sind und an gleichen Filterelementen jeweils ein Filterrechen vorgesehen ist.

Eine besonders vorteilhafte Ausführung der Erfindung ist dadurch gekennzeichnet, daß die Stirnflächen der Filterelemente als filterungsaktive Teile ausgebildet sind, so daß die Gesamtfläche der Filterelemente, die für die Ausfilterung zur Verfügung steht, wesentlich vergrößert ist.

Insgesamt erlaubt die erfindungsgemäße Förderband-Filtereinrichtung einen stetigen Betrieb, der nicht ständig durch behinderndes grobstückiges und nicht ausförderbares Filtergut unterbrochen wird; vielmehr wird die Anordnung nunmehr mit allen praktisch anfallenden Filteraufgaben fertig.

Die Erfindung wird nachstehend an Hand der Zeichnung an einem Ausführungsbeispiel näher erläutert. Es zeigen
- Fig. 1: eine Seitenansicht einer erfindungsgemäßen Förderband-Filtereinrichtung im Betrieb,
- Fig. 2: eine Einzelheit A aus Fig. 1,
- Fig. 3: ein Filterelement gemäß der Erfindung in Seitenansicht,
- Fig. 4: einen Schnitt B - B aus Fig. 3, sämtlich in schematisch vereinfachender Darstellung gezeichnet und
- Fig. 5: eine weitere Ausführungsform eines Filterelementes gemäß der Erfindung.

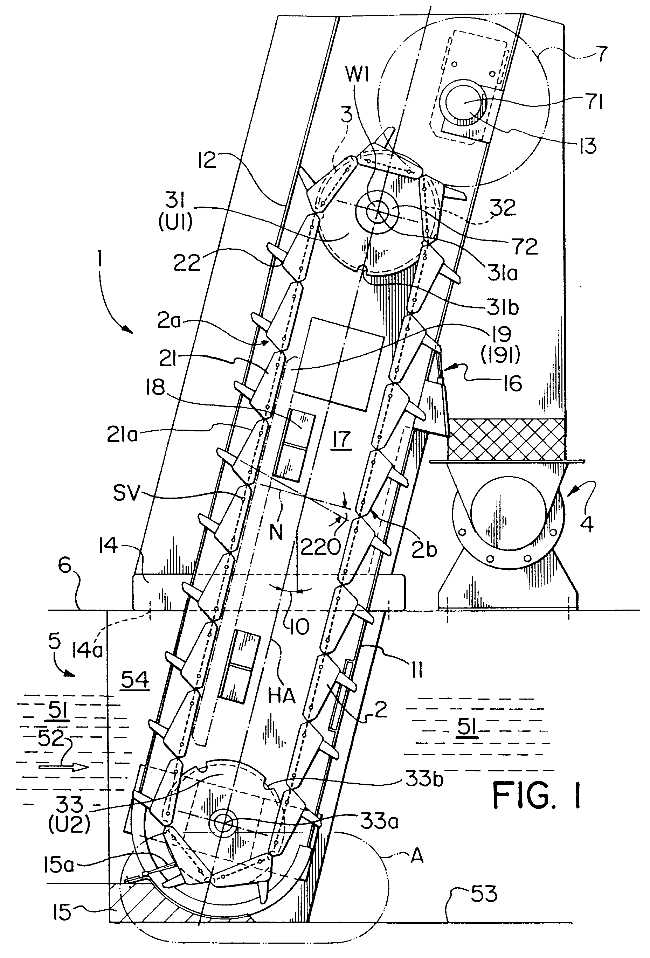

Entsprechend Fig. 1 besteht eine erfindungsgemäße Förderband-Filtereinrichtung im wesentlichen aus einem Rahmengestell 1, einem an dem Rahmengestell 1 geführten Filterband 2, einem mit dem Rahmengestell 1 und dem Filterband 2 verbundenen Kettentrieb 3 und einer Filtergut-Abförderung 4; sie ist zur Reinigung eines Kanales 5 vorgesehen, der sich unterhalb des Erdboden-Niveaus 6 erstreckt.

Der Kanal 5 wird von einer feststoffbeladenen Flüssigkeit 51 durchströmt in einer durch einen Richtungspfeil veranschaulichten Strömungsrichtung 52, wobei sich der Kanal 5 senkrecht zur Papierebene in einer erheblichen Breite erstrecken kann. Die Förderband-Filtereinrichtung reicht bis zu einer Sohle 53, so daß der gesamte Strömungsquerschnitt des Kanals 5 quer zu der Strömungsrichtung 52 so abgesperrt ist, daß die Flüssigkeit 51 den im Kanal 5 befindlichen Teil der Förderband-Filtereinrichtung passieren muß.

Das Rahmengestell 1 besteht aus einem unteren Gestellteil 11, das den von der Flüssigkeit 51 zu passierenden Teil bildet, und einem oberen Gestellteil 12, das sich außerhalb des Kanals 5 befindet und zur Lagerung eines elektromotorischen Antriebes dient, der auf der Welle W1 befestigt ist. Zwischen den Gestellteilen 11 und 12 ist ein Anschlußrahmen 14 vorgesehen, mit dessen Hilfe das Rahmengestell 1 beiderseits des Kanals 5 ortsfest arretiert ist, beispielsweise durch an den Seitenwänden 54 des Kanals 5 einbetonierte Ankerschrauben 14a. Die Gestellteile 11 und 12 sind an dem Anschlußrahmen 14 so angeschlossen, daß das Rahmengestell 1 um einen spitzen Förderwinkel 10 zur Senkrechten geneigt angeordnet ist, wenn das Erdboden-Niveau 6 etwa waagerecht verläuft. Der Förderwinkel 10 beträgt bevorzugt 15°, kann jedoch auch bis zu 30° ausgeführt sein. In der Zeichnung ist der Förderwinkel 10 unveränderbar dargestellt; es ist stattdessen aber auch möglich, das Rahmengestell 1 an dem Anschlußrahmen 14 verschwenkbar zu gestalten.

Von dem Antrieb werden Kettenräder 31 angetrieben, die ein erstes Umlenkelement U1 für eine Antriebskette 32 eines Kettentriebes 3 bilden und in seiner Achse 31a in dem Gestellteil 12 gelagert sind. Auf der zugehörigen Welle W1 sind beiderseits des Filterbandes 2 die ersten Umlenkelemente. U1 vorgesehen, an denen jeweils eine Antriebskette 32 um 180° umgelenkt wird. In der Regel sind beide Umlenkelemente U1 als Kettenräder 31 ausgebildet, so daß beiderseits des Filterbandes 2 die Antriebsketten 32 synchron angetrieben werden.

In gleicher Weise sind an dem Gestellteil 11 zweite Umlenkelemente U2 auf einer ortsfest gelagerten Welle vorgesehen. In der Zeichnung sind diese Umlenkelemente U2 ebenfalls als Kettenräder 33 ausgebildet, jedoch genügen hier unter Umständen auch einfache Umlenkrollen. Die Verbindung der Achse 33a der Kettenräder 33 mit der Achse 31a der Kettenräder 31 bildet eine Hauptachse HA der Förderband-Filtereinrichtung in dessen in der Fig. 1 gezeigten Seitenansicht.

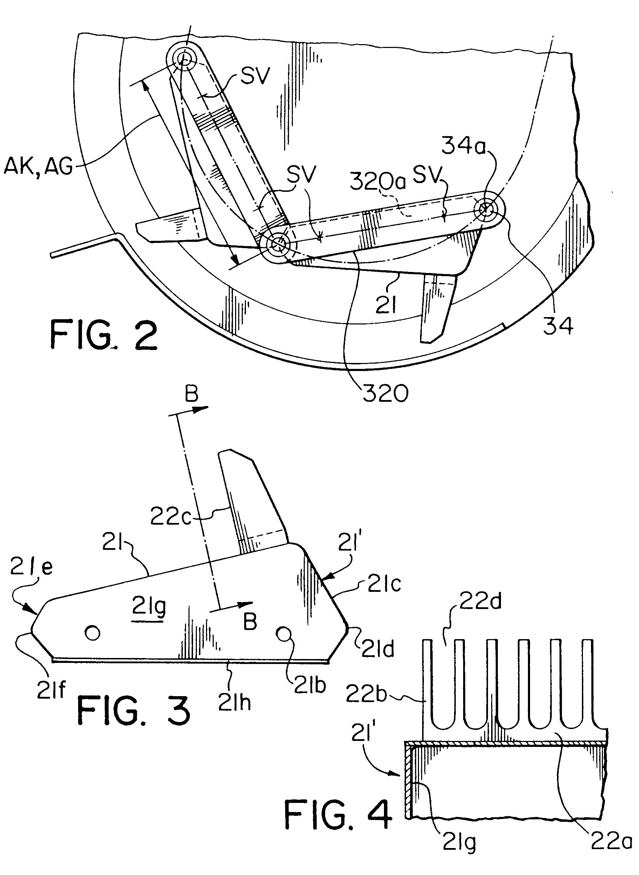

Beide Umlenkelemente U1,U2 sind in der Fig. 1 leicht als Kettenräder 31,33 zu identifizieren, da die erforderlichen, mit den Gelenkbolzen 34 (Fig. 2) der Antriebskette 32 zusammenwirkenden Gelenkpfannen 31b,33b gut zu erkennen sind. Ihre Achsabstände AK sind den Achsabständen AG der Gelenkbolzen 34 gleich. Hingegen sind die Kettenglieder 320 der Antriebskette 32 in der Fig. 1 nicht eingezeichnet, um die Übersichtlichkeit zu wahren; sie sind aber in der Fig. 2 ohne weiteres als einfache, zwischen den Gelenkbolzen 34 verlaufende Laschen zu erkennen.

An jedem der Kettenglieder 320 ist auf deren "innerer" Seite 320a ein Filterelement 21 befestigt, das sich mit seinen waagerechten Längskanten im wesentlichen senkrecht zur Papierebene zwischen den das Filterband 2 seitlich einfassenden Antriebsketten 32 in ganzer Breite erstreckt. Zur Befestigung der Kettenglieder 320 mit den Filterelementen 21 sind jeweils zwei Schraubverbindungen SV vorgesehen, die in Fig. 1 und 2 angedeutet sind; in der Fig. 3 sind zugehörige Durchgangsbohrungen 21b eingezeichnet.

Die Filterelemente 21 sind im Querschnitt etwa dreieckig ausgebildet und jeweils durch Stirn- und Seitenflächen zu Filterkörben 21' ausgeformt, wobei die erforderlichen Filteröffnungen in den flächigen Filterelementen 21 vorgesehen sind. Eine erste, höhere Stirnfläche 21c (Fig. 3) ist aus dem Filterelement 21 abgekantet und durch eine sekundäre, versteifende Abkantung so ausgebildet, daß eine Stoßkante 21d entsteht. Ähnlich befindet sich in einer zweiten Stirnfläche 21e eine weitere Stoßkante 21f; beide Stoßkanten 21d,21f sind an den Filterkörben 21' so gelegen; daß sie sich in der Flucht der mit den Gelenkbolzen 34 verbundenen Gelenkachsen 34a befinden, geringfügig voneinander beabstandet. Damit ist sichergestellt, daß der so verbleibende schlitzförmige Abstand konstant bleibt, unabhängig von der relativen Verschwenkung zweier Filterelemente 21 gegeneinander. Die Seitenflächen 21g verdeutlichen den in groben Zügen dreieckigen Querschnitt der Filterkörbe 21'. Sie sind mit den anliegenden Stirnflächen 21c, 21e stoffschlüssig verbunden. Die Stirnflächen 21c, 21e sind als Filterflächen ausgeführt.

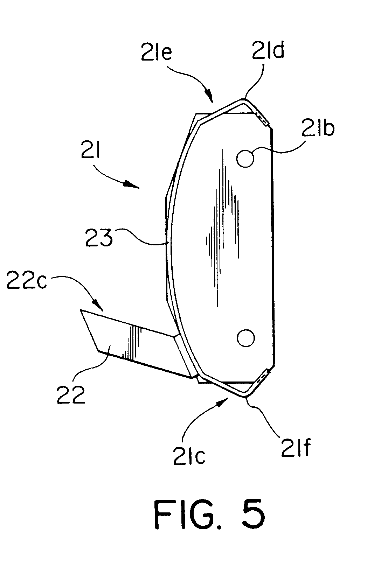

Eine besonders vorteilhafte Ausbildung des Filterelementes 21 ist in der Fig. 5 dargestellt. Dieses Filterelement hat eine konvex gekrümmte Siebfläche 23, die einen Krümmungsradius aufweist, der dem Abstand der Siebfläche 23 zur Achse 31a des oberen Kettenrades 31 entspricht. Die Stirnfläche 21e und 21c sind entsprechend dem Ausführungsbeispiel nach Fig. 3 ausgebildet. Des gleichen fluchten die Stoßkanten 21d und 21f mit den Gelenkachsen 34a der Kettenglieder.

In den bei der Aufwärtsbewegung der Filterelemente jeweils unten liegenden Bereich der Filterelemente sind Filterrechen 22 an den Filterelementen angebracht, deren Hebefläche 22c entsprechend denen gemäß Fig. 3 ausgebildet sind. Der Vorteil dieser Ausbildung besteht darin, daß beim Abbürstvorgang des angesammelten Filtergutes eine rotierende Bürste alle Flächen des Filterelementes mit gleichem Anpreßdruck bearbeiten kann und daß dieses effektiver bei einem geringen Bürstenverschleiß erreichbar ist.

In der Fig. 1 besteht das Filterband 2 aus einer Vielzahl in der Zeichnung nicht unterscheidbarer, gleicher Filterelemente 21. Tatsächlich können aber verschiedene Filterelemente 21 vorgesehen sein, die sich insbesondere durch den Querschnitt und die Anordung und Anzahl der in ihnen befindlichen Filteröffnungen unterscheiden, wie oben bereits dargelegt worden ist. Ihr Querschnitt ist hier aber einheitlich ausgeführt.

An den Filterkörben 21' sind Filterrechen 22 befestigt, beispielsweise angeschweißt. Sie bestehen einstückig aus einer Leiste 22a und einer Vielzahl von Rechenzinken 22b, erstrecken sich in ganzer Breite des jeweiligen Filterkorbes 21' und sind auf dem Filterelement 21 auf der Seite der höheren Stirnfläche 21e vorgesehen; der Filterkorb 21' ist dabei so in das Filterband 2 eingefügt, daß sich diese Stirnfläche 21e am gezogenen Trumm 2a des Filterbandes 2 an dem Filterkorb 21' unten befindet und dabei von den Rechenzinken 22b eine der Aufnahme von groben Feststücken dienende Hebefläche 22c ausgebildet wird. Die über die Breite des Kanals 5 waagerechte Hebefläche 22c schließt mit einer in Fig. 1 eingezeichneten, auf der Hauptachse HA stehenden Normalen N einen Neigungswinkel 220 von 15° ein, so daß hier die Hebefläche 22c um 30° zur Waagerechten geneigt ist und Filtergut sicher gefördert werden kann.

Zum Abstreifen des aus der Flüssigkeit geförderten Rechengutes dient eine rotierende Bürste 7, die von einem an der Achse 71 befestigten Antrieb 13 angetrieben wird. Diese Bürste ist derart oberhalb des Filterbandes 2 angeordnet, daß die von der Bürste erfaßten Flächen beim Abstreifen jeweils eben liegen.

Eine zweite Abstreifeinrichtung 16 befindet sich, am Gestellteil 12 befestigt, am losen Trumm 2b zur Entfernung des noch an dem Filterband 2 anhaftenden Filtergutes in die Filtergut-Abförderung 4 für den Abtransport des Filtergutes.

Das Rahmengestell 1 ist parallel zu den Seitenwänden 54 des Kanals 5 mit Seitenwangen 17 versehen, an denen mehrere, durch den gesamten Kanal 5 geführte, waagerechte Quertraversen 18 angebracht sind. Die Quertraversen 18 dienen als Auflager für eine Unterlage 19, die aus einer Anzahl paralleler Auflageschienen 191 für die Filterkörbe 21' besteht, so daß sich diese auch bei großer Belastung nicht durchbiegen können. An den Filterkörben 21' im Bereich der Auflageschienen 191 können Gleitstücke 21h angebracht sein, um die Biegung und Flächenpressung zu vermindern.

### Aufstellung der Bezugszeichen

- 1: Rahmengestell
- 10: Förderwinkel
- 11: Gestellteil (unteres)
- 12: Gestellteil (oberes)
- 13: Antrieb
- 14: Anschlußrahmen
- 14a: Ankerschraube
- 15: Abdichteinrichtung
- 15a: Abdichtelement
- 16: Abstreifeinrichtung
- 17: Seitenwange
- 18: Quertraverse
- 19: Unterlage
- 191: Auflageschiene
- 2: Filterband
- 2a: Trumm
- 2b: Trumm
- 21: Filterelement
- 21': Filterkorb
- 21a: Längskante
- 21b: Durchgangsbohrung
- 21c: Stirnfläche
- 21d: Stoßkante
- 21e: Stirnfläche
- 21f: Stoßkante
- 21g: Seitenfläche
- 21h: Gleitstück
- 22: Filterrechen
- 220: Neigungswinkel
- 22a: Leiste
- 22b: Rechenzinken
- 22c: Hebefläche
- 22d: Lücke
- 3: Kettentrieb
- 31: Kettenrad
- 31a: Achse
- 31b: Gelenkpfanne
- 32: Antriebskette
- 320: Kettenglied
- 320a: Seite
- 33: Kettenrad
- 33a: Achse
- 33b: Gelenkpfanne
- 34: Gelenkbolzen
- 34a: Gelenkachse
- 4: Filtergut-Abförderung
- 5: Kanal
- 51: Flüssigkeit
- 52: Strömungsrichtung
- 53: Sohle
- 54: Seitenwand
- 6: Erdboden-Niveau
- 7: Bürste
- 71: Achse
- 72: Motor
- AG: Achsabstand (Gelenkbolzen)
- AK: Achsabstand (Gelenkpfanne)
- HA: Hauptachse
- N: Normale
- SV: Schraubverbindung
- U1,U2: Umlenkelement
- W1: Welle

## Patentansprüche

1. Förderband-Filtereinrichtung zur mechanischen Reinigung einer in einem Kanal oder dergleichen strömenden, mit Feststoffen verunreinigten Flüssigkeit mit
(a) einem endlosen Filterband (2) aus miteinander verbundenen, jeweils um eine waagerecht liegende Gelenkachse gegeneinander verschiebbaren, flächigen Filterelementen (21), wobei jedes Filterelement (21) zwei einander gegenüberliegende Stirnflächen (21c, 21e) aufweist,
(b) einem beiderseits des Filterbandes (2) vorgesehenen flexiblen Antriebsmittel aus einem Kettentrieb (3) mit Umlenkelementen (31, 33) und zwei endlosen, Kettenglieder (320) aufweisenden Antriebsketten (32), an denen seitlich die Filterelemente (21) befestigt sind,
(c) einem Rahmengestell (1), das die Umlenkelemente (31, 33) und das Filterband (2) trägt, wobei
(d) das Rahmengestell (1) ein außerhalb des Kanals verbleibendes oberes Gestellteil (12) aufweist, an dem mindestens ein Antriebsmotor (72) für das Antriebsmittel befestigt ist und in dessen Bereich das Filtergut ausgeworfen werden kann,
dadurch gekennzeichnet, daß
jedes Filterelement (21) an einem Kettenglied (320) starr befestigt ist, daß die Stirnflächen (21e, 21c) des Filterelementes (21) abgewinkelt sind und jeweils eine mit einer der Gelenkachsen (34a) der Kettenglieder (320) fluchtende Stoßkante (21d, 21f) aufweisen, so daß zwei aneinanderstoßende Stirnflächen (21c,21e) benachbarter Filterelemente (21) an diesen Stoßkanten (21d,21f) sowohl bei geradliniger Bewegung als auch bei der Umlenkung dieser Filterelemente (21) beständig einen konstanten, geringen Abstand voneinander aufweisen, der das Filtergut in Strömungsrichtung (52) der Flüssigkeit nicht passieren läßt, und daß an mindestens einem der Filterelemente (21) mindestens ein Filterrechen (22) befestigt ist, der mehrere Rechenzinken (22b) aufweist.

2. Förderband-Filtereinrichtung nach Anspruch 1, dadurch gekennzeichnet, daß die Oberfläche der Filterelemente (21) konvex gekrümmt ist, wobei der Krümmungsradius dem Abstand der Oberfläche des Filterelementes (21) zur Achse (31a) des oberen Kettenrades (31) im oberen Umlenkbereich entspricht.

3. Förderband-Filtereinrichtung nach Anspruch 1 oder 2, dadurch gekennzeichnet, daß die Hebeflächen (22c) des Filterrechens (22) mit einer Normalen (N) auf der Hauptachse (HA) der Förderband-Filtereinrichtung einen Neigungswinkel (220) zwischen 0° und 30° einschließen.

4. Förderband-Filtereinrichtung nach einem der Ansprüche 1 bis 3, dadurch gekennzeichnet, daß als untere Umlenkelemente (U2) glatte Umlenkrollen oder Kettenräder (33) vorgesehen sind.

5. Förderband-Filtereinrichtung nach einem der Ansprüche 1 bis 4, dadurch gekennzeichnet, daß die Stoßkanten (21d,21f) durch jeweils eine längskanten-parallele Abkantung der Stirnflächen (21c,21e) gebildet werden und einen stumpfen, vorzugsweise annähernd rechten Abkantwinkel einschließen.

6. Förderband-Filtereinrichtung nach einem der Ansprüche 1 bis 5, dadurch gekennzeichnet, daß die Stirnflächen (21c,21e) und/oder die Seitenflächen (21g) der Filterelemente (21) so ausgebildet sind, daß sie die flächigen Filterelemente (21) zu räumlichen, zu der Hauptachse (HA) hin offenen Filterkörben (21') ergänzen, die dabei einen dreieckigen oder konvex gewölbten, durch die Abkantungen gebrochenen Querschnitt aufweisen.

7. Förderband-Filtereinrichtung nach einem der Ansprüche 1 bis 6, dadurch gekennzeichnet, daß im Bereich der Sohle (53) des Kanals (5) an dem Rahmengestell (1) quer zu der Strömungsrichtung (52) der Flüssigkeit eine erste die Filterrechen (22) säubernde mit Bürsten (15a) versehene Abdichteinrichtung (15) vorgesehen ist.

8. Förderband-Filtereinrichtung nach Anspruch 7, dadurch gekennzeichnet, daß an der Abdichteinrichtung (15) elastische Abstreifelemente (15a) vorgesehen sind, die in die Lücken (22d) zwischen den Rechenzinken (22b) des jeweiligen, durch die Abstreifeinrichtung (15) bewegten Filterrechens (22) eingreifen.

9. Förderband-Filtereinrichtung nach einem der Ansprüche 1 bis 8, dadurch gekennzeichnet, daß das gezogene Trumm (2a) des Filterbandes (2) auf mindestens einer an dem Rahmengestell (1) ortsfest gehalterten Unterlage (19) gleitend aufliegend angeordnet ist, die aus parallel zu der Förderrichtung der Filterelemente (21) vorgesehenen Auflageschienen (191) besteht.

10. Förderband-Filtereinrichtung nach einem der Ansprüche 1 bis 9, dadurch gekennzeichnet, daß an den Filterelementen (21) diese versteifende Gleitstücke (21h) vorgesehen sind, die auf der Unterlage (19) aufliegen.

11. Förderband-Filtereinrichtung nach einem der Ansprüche 1 bis 10 , dadurch gekennzeichnet, daß im oberen Umlenkbereich des Filterbandes (2) oberhalb des Kettenrades (31) ein rotierend antreibbares Abstreifelement (7) angeordnet ist.

12. Förderband-Filtereinrichtung nach einem der Ansprüche 1 bis 11, dadurch gekennzeichnet, daß die Achse (71) des Abstreifelementes (7) seitlich in Drehrichtung zur Hauptachse (HA) versetzt angeordnet ist und relativ zur Achse (31a) des Kettenrades (31) einstellbar ist.

13. Förderband-Filtereinrichtung nach einem der Ansprüche 1 bis 12, dadurch gekennzeichnet, daß das Abstreifelement (7) eine Bürste ist.

14. Förderband-Filtereinrichtung nach einem der Ansprüche 1 bis 13, dadurch gekennzeichnet, daß an dem oberen Gestellteil (12) eine zweite Abstreifeinrichtung (16) vorgesehen ist, die an den Filterelementen (21) festhaftendes, nicht abgeworfenes Filtergut von dem Filterband (2) entfernt.

15. Förderband-Filtereinrichtung nach Anspruch 14, dadurch gekennzeichnet, daß als zweite Abstreifeinrichtung (16) eine Bürste vorgesehen ist.

16. Förderband-Filtereinrichtung nach einem der Ansprüche 1 bis 15, dadurch gekennzeichnet, daß an jedem der Filterelemente (21) je ein Filterrechen (22) vorgesehen ist.

17. Förderband-Filtereinrichtung nach einem der Ansprüche 1 bis 16, dadurch gekennzeichnet, daß die Stirnflächen (21c, 21e) als filterungsaktive Teile ausgebildet sind.

## Claims

1. A conveyor-belt filter device for mechanically cleaning a liquid flowing in a duct or the like and contaminated with solids, with
(a) an endless filter band (2) comprising flat filter elements (21) joined to one another and each displaceable towards one another about a horizontally orientated pivot axis, wherein each filter element (21) comprises two mutually opposite end faces (21c, 21e),
(b) a flexible driving means provided on both sides of the filter band (2) and comprising a chain drive (3) with reversing elements (31, 33) and two endless driving chains (32) which comprises chain links (320) and to which the filter elements (21) are secured laterally,
(c) a frame structure (1) which supports the reversing elements (31, 33) and the filter band (2), wherein
(d) the frame structure (1) has an upper frame part (12) which remains outside the duct and to which at least one driving motor (72) for the driving means is secured and in the region of which the filter material can be ejected,
**characterized in that** each filter element (21) is rigidly secured to a chain link (320), the end faces (21e, 21c) of the filter element (21) are set at an angle and each comprise a terminating edge (21d, 21f) in alignment with one of the pivot axes (34a) of the chain links (320), so that two mutually abutting end faces (21c, 21e) of adjacent filter elements (21) are always at a constant slight distance from each other at the said terminating edges (21d, 21f) both during straight movement and during the reversal of these filter elements (21), the said distance not allowing the filter material to pass in the direction of flow (52) of the liquid, and at least one filtering rake (22) comprising a plurality of prongs (22b) is secured to at least one of the filter elements (21).

2. A conveyor-belt filter device according to Claim 1, **characterized in that** the surface of the filter elements (21) is curved in a convex manner, wherein the radius of curvature corresponds to the distance of the surface of the filter element (21) from the axis (31a) of the upper chain wheel (31) in the upper reversing region.

3. A conveyor-belt filter device according to Claim 1 or 2, **characterized in that** the lifting faces (22c) of the filtering rake (22) form an angle of inclination (220) of between 0° and 30° with a perpendicular (**N**) on the main axis (**HA**) of the conveyor-belt filter device.

4. A conveyor-belt filter device according to one of Claims 1 to 3, **characterized in that** smooth reversing rollers or chain wheels (33) are provided as lower reversing elements (**U2**).

5. A conveyor-belt filter device according to one of Claims 1 to 4, **characterized in that** the terminating edges (21d, 21f) are each formed by one respective longitudinal-edge parallel bevel of the end faces (21c, 21e) and form an obtuse, preferably approximately rectangular bevel angle.

6. A conveyor-belt filter device according to one of Claims 1 to 5, **characterized in that** the edge faces (21c, 21e) and/or the lateral faces (21g) of the filter elements (21) are constructed in such a way that they enlarge the flat filter elements (21) to form three-dimensional filter baskets (21') which are open towards the main axis (**HA**) and which have a triangular or a convexly curved cross-section broken by the bevels.

7. A conveyor-belt filter device according to one of Claims 1 to 6, **characterized in that** a first sealing device (15), which cleans the filtering rakes (22) and is provided with brushes (15a), is provided in the region of the bottom (53) of the duct (5) on the frame structure (1) transversely to the direction of flow (52) of the liquid.

8. A conveyor-belt filter device according to Claim 7, **characterized in that** resilient wiping elements (15a), which engage in the gaps (22d) between the prongs (22b) of the respective filtering rake (22) moved by the wiping device (15), are provided on the sealing device (15).

9. A conveyor-belt filter device according to one of Claims 1 to 8, **characterized in that** the tensioned strand (2a) of the filter band (2) is arranged resting in a sliding manner on at least one support (19) which is mounted stationary on the frame structure (1) and which comprises abutment rails (191) provided parallel to the conveying direction of the filter elements (21).

10. A conveyor-belt filter device according to one of Claims 1 to 9, **characterized in that** slide members (21h), which reinforce the filter elements (21) and which rest on the support (19), are provided on the said filter elements (21).

11. A conveyor-belt filter device according to one of Claims 1 to 10, **characterized in that** a wiping element (7) driven in a rotating manner is arranged above the chain wheel (31) in the upper reversing region of the filter band (2).

12. A conveyor-belt filter device according to one of Claims 1 to 11, **characterized in that** the axis (71) of the wiping element (7) is arranged offset laterally towards the main axis (**HA**) in the direction of rotation and can be set relative to the axis (31a) of the chain wheel (31).

13. A conveyor-belt filter device according to one of Claims 1 to 12**, characterized in that** the wiping element (7) is a brush.

14. A conveyor-belt filter device according to one of Claims 1 to 13, **characterized in that** a second wiping device (16), which removes filter material - adhering to the filter elements (21) and not ejected - from the filter band (2), is provided on the upper frame part (12).

15. A conveyor-belt filter device according to Claim 14, **characterized in that** a brush is provided as the second wiping device (16).

16. A conveyor-belt filter device according to one of Claims 1 to 15, **characterized in that** one filtering rake (22) is provided respectively on each of the filter elements (21).

17. A conveyor-belt filter device according to one of Claims 1 to 16, **characterized in that** the end faces (21c, 21e) are constructed as parts active in the filtering.

## Revendications

1. Dispositif de filtration à bande transporteuse pour purifier mécaniquement un liquide pollué par des matières solides, s'écoutant dans un canal ou similaire, comportant
(a) une bande de filtration (2) sans fin constituée d'éléments de filtre plans (21) reliés entre eux et pouvant chacun coulisser les uns contre les autres autour d'un axe d'articulation disposé horizontalement, chaque élément de filtre (21) présentant deux faces frontales (21c, 21e) disposées à l'opposé l'une de l'autre,
(b) un moyen d'entraînement souple prévu des deux côtés de la bande de filtration (2) et comportant un entraînement par chaîne (3) composé d'organes de renvoi (31, 33) et de deux chaînes d'entraînement sans fin (32), présentant des éléments de chaîne (320), et sur lesquelles sont fixés latéralement les éléments de filtre (21),
(c) un châssis formant cadre (1), qui porte les organes de renvoi (31, 33) et la bande de filtration (2), tandis que
(d) le bâti formant cadre (1) présente une partie supérieure du bâti (12), restant en-dehors du canal, sur laquelle est fixé au moins un moteur d'entraînement (72) pour le moyen d'entraînement, et dans la zone de laquelle peut être déversé le produit de filtration,
caractérisé en ce que
chaque élément de filtre (21) est fixé de façon rigide sur un maillon de chaîne (320), en ce que les faces frontales (21c, 21e) de l'élément de filtre (21) forment un angle et présentent chacune une arête de butée (21d, 21f) dans l'alignement de l'un des axes d'articulation (34a) des maillons de chaîne (320), de telle façon que deux faces frontales (21c, 21e) de deux éléments de filtre (21) voisins venant buter l'une sur l'autre présentent en permanence l'une par rapport à l'autre une distance faible et constante sur ces arêtes de butée (21d, 21f), aussi bien dans le cas d'un déplacement rectiligne que dans le cas du changement de direction de ces éléments de filtre (21), cette distance faible ne laissant pas passer le produit à filtrer dans la direction d'écoulement (52) du liquide, et en ce que, sur au moins l'un des éléments de filtre (21), est fixé au moins un râteau de filtre (22) qui présente plusieurs dents de râteau (22b).

2. Dispositif de filtration à bande transporteuse suivant la revendication 1, caractérisé en ce que la surface supérieure des éléments de filtre (21) présente une courbure convexe, dont le rayon de courbure correspond à la distance entre la surface supérieure de l'élément de filtre (21) et l'axe (31a) du tourteau de chaîne supérieur (31), dans la zone supérieure de renvoi.

3. Dispositif de filtration à bande transporteuse suivant la revendication 1 ou la revendication 2, caractérisé en ce que les surfaces de levage (22c) du râteau de filtre (22) forment, avec une normale (N) à l'axe principal (HA) du dispositif de filtration à bande transporteuse, un angle d'inclinaison (220) compris entre 0° et 30°.

4. Dispositif de filtration à bande transporteuse suivant l'une des revendication 1 à 3, caractérisé en ce que, comme organes de renvoi inférieurs (U2), sont prévus des galets de renvoi lisses ou des tourteaux de chaînes (33).

5. Dispositif de filtration à bande transporteuse suivant l'une des revendications 1 à 4, caractérisé en ce que les arêtes de butée (21d, 21f) sont chacune formées par un repli formant arête, parallèle à l'arête longitudinale, des faces frontales (21c, 21e), et referment un angle obtus de l'arête, de préférence proche d'un angle droit.

6. Dispositif de filtration à bande transporteuse suivant l'une des revendications 1 à 5, caractérisé en ce que les faces frontales (21c, 21e) et/ou les faces latérales (21g) des éléments de filtre (21) sont réalisées de façon qu'elles agrandissent les éléments de filtre plans (21) pour former des paniers de filtre (21') à trois dimensions, ouverts en direction de l'axe principal (HA) et présentant alors une section triangulaire ou à courbure convexe, coupée par les arêtes.

7. Dispositif de filtration à bande transporteuse suivant l'une des revendications 1 à 6, caractérisé en ce que, dans la zone de la sole (53) du canal (5), sur le bâti formant cadre (1), perpendiculairement à la direction d'écoulement (52) du liquide, est prévu un premier dispositif d'étanchéité (15), muni de brosses (15a), nettoyant les râteaux de filtre (22).

8. Dispositif de filtration à bande transporteuse suivant la revendication 7, caractérisé en ce que, sur le dispositif de raclage (15), sont prévus des organes de raclage (15a) élastiques, qui s'engagent dans les lumières (22d) entre les dents de râteau (22b) de chacun des râteaux de filtre (22) concernés, mis en mouvement par le dispositif de raclage (15).

9. Dispositif de filtration à bande transporteuse suivant l'une des revendications 1 à 8, caractérisé en ce que le brin tiré (2a) de la bande de filtration (2) est disposé de façon à reposer glissant sur au moins un support d'appui (19), maintenu fixe sur le bâti formant cadre (1) et constitué par des rails d'appui (191) prévus parallèlement à la direction de transport des éléments de filtre (21).

10. Dispositif de filtration à bande transporteuse suivant l'une des revendications 1 à 9, caractérisé en ce que, sur les éléments de filtre (21), sont prévues des pièces de glissement (21h) qui les renforcent et qui reposent sur le support d'appui (19).

11. Dispositif de filtration à bande transporteuse suivant l'une des revendications 1 à 10, caractérisé en ce que, dans la zone supérieure de renvoi de la bande de filtration (2), au-dessus du tourteau de chaîne (31), est disposé un organe de raclage (7) pouvant être entraîné en rotation.

12. Dispositif de filtration à bande transporteuse suivant l'une des revendications 1 à 11, caractérisé en ce que l'axe (71) de l'organe de raclage (7) est disposé décalé latéralement par rapport à l'axe principal (HA), dans le sens de rotation et peut être réglé par rapport à l'axe (31a) du tourteau de chaîne (31).

13. Dispositif de filtration à bande transporteuse suivant l'une des revendications 1 à 12, caractérisé en ce que l'organe de raclage (7) est une brosse.

14. Dispositif de filtration à bande transporteuse suivant l'une des revendications 1 à 13, caractérisé en ce que, sur la partie supérieure du bâti (12), est prévu un deuxième dispositif racleur (16) qui enlève de la bande de filtration (2) le produit de filtration adhérant sur les éléments de filtre (21) et non rejeté.

15. Dispositif de filtration à bande transporteuse suivant la revendication 14, caractérisé en ce que, comme deuxième dispositif racleur (16), il est prévu une brosse.

16. Dispositif de filtration à bande transporteuse suivant l'une des revendications 1 à 15, caractérisé en ce que, sur chacun des éléments de filtre (21), il est prévu chaque fois un râteau de filtre (22).

17. Dispositif de filtration à bande transporteuse suivant l'une des revendications 1 à 16, caractérisé en ce que les faces frontales (21c, 21e) sont réalisées sous la forme de pièces à filtration active.
